# EUROPEAN PATENT SPECIFICATION

(11) **EP 2 254 835 B1**
(45) Date of publication and mention of the grant of the patent: **01.02.2012**
(21) Application number: 09712220.4
(22) Date of filing: 06.02.2009
(51) Int. Cl.: C01G 23/047

(54) **PROCESS FOR THE MANUFACTURE OF TITANIA COATED MICROSPHERES**
VERFAHREN ZUR HERSTELLUNG VON TITANOXIDBESCHICHTETEN MIKROKUGELN
PROCÉDÉ DE FABRICATION DE MICROSPHÈRES REVÊTUES DE DIOXYDE DE TITANE

(30) Priority: 21.02.2008 GB 0803194
(43) Date of publication of application: 01.12.2010
(73) Proprietor: Acton Technologies Limited, Co. Limerick (IE)
(72) Inventor: BANKS, Malcolm Robert, Blacket Edinburgh EH9 1SA (GB)
(74) Representative: Simpson, Mark Geoffrey
(86) International application number: PCT/GB2009/050115
(87) International publication number: WO 2009/104011

(56) References cited:
- WO-A-96/00404
- JP-B- 7 035 268
- US-A- 6 153 539
- SHIFU C ET AL: "Photocatalytic degradation of organophosphorus pesticides using floating photocatalyst TiO2.SiO2/beads by sunlight" SOLAR ENERGY, PERGAMON PRESS. OXFORD, GB, vol. 79, no. 1, 1 July 2005 (2005-07-01), pages 1-9, XP004942366 ISSN: 0038-092X
- KISHIMOTO H ET AL: "Photocatalytic activity of titanium oxide prepared by liquid phase deposition (LPD)" JOURNAL OF MATERIALS CHEMISTRY, THE ROYAL SOCIETY OF CHEMISTRY, CAMBRIDGE, GB, vol. 8, no. 9, 1 January 1998 (1998-01-01), pages 2019-2024, XP002330917 ISSN: 0959-9428
- H. STROMM P.LOBMANN: "Liquid phase deposition of tio2 on polysyrenelatex particles functionalized by the absorbtion of polyelectrolytes" CHEMISTRY OF MATERIALS, vol. 17, 2005, page 6772, XP002540150

## Description

The present invention relates to a process for the manufacture of titania-coated inorganic microspheres, particularly titania coated glass microspheres.

Microspheres are used in many areas of technology. For example, syntactic foams, comprising hollow microspheres embedded in a polymer matrix, are widely used in the marine industry in the manufacture of buoyant and/or impact resistant elements, such as pipe sheaths, fenders, markers and floats. A major advantage of using syntactic foams compared to conventional foams is that the macro density and strength of the material can be accurately controlled by varying the diameter, wall thickness and packing density of the microspheres.

The properties of syntactic materials (i.e. foams, paints and coatings), especially their density and strength, are dependent, to a certain extent, on the nature of the microsphere-matrix interface. In certain applications, it is desirable to alter the properties of the microsphere-matrix to improve the macroscopic properties of the syntactic foam. One way to do this is to functionalise the surface of the microspheres, for example by coating them to alter the nature of the bond between the microsphere surface and the matrix material.

Another application of microspheres, in particular hollow microspheres is in the aerospace industry where they can be used as a filler in paints and coatings. The microspheres can be used to reduce the macro density of the paint or coating, and increase its longevity. A further advantage of adding microspheres to paints and coatings is that, in certain circumstances, the ultraviolet stability of the paint or coating can be improved.

Titania (titanium (IV) oxide, or TiO₂) is a commonly used white pigment. A pigment is a dry colouring material, which is usually an insoluble powder, to be mixed with a liquid to produce paint; with plastics to produce coloured plastics; or incorporated into other matter. Titania is used as a pigment in a wide variety of materials including paints, coatings, plastics, paper, ink and foodstuffs. In this respect it is generally superior to other white pigments by virtue of its brightness and the high refractive index of its commercially important crystalline forms (anatase, n = 2.4; rutile, n = 2.9).

In addition, titania, especially in the anatase form has UV-photocatalytic activities which may additionally impart a sterilizing/ disinfecting or other protective properties to a titania-containing product. Titania absorbs strongly in the UV wavelength range, and for this reason is the white pigment of choice for products such as PVC window frames (which may be subjected to prolonged exposure to sunlight) where it helps to combat UV-induced discolouration.

Titania pigment is available in bulk from several sources and typically consists of closely milled or otherwise ground, flakes of anatase or rutile. These flakes have typical dimensions of 5 - 300 x 1 - 5 micrometers. Specific dimensions within these ranges may be chosen to best suit particular uses of the pigment.

In general, a surface is coated with paint to protect the underlying materials (for example the reactive metals on an aircraft). Painting also generally confers resistance against corrosion (oxidation) and physical damage (e.g. sand- and dust-mediated erosion). In this context the presence of a pigment such as titania may contribute directly to the properties of a paint by acting as a physical barrier, by reflecting heat (infra-red radiation), by absorbing UV radiation and by conferring antioxidant properties, as well as contributing to an aesthetically pleasing white finish.

Although titania has many desirable properties as a pigment, it also has an undesirable feature. The density of all of its useful crystalline forms is high. The density of the anatase form of titania is 3.8 g/cm³, and the density of the rutile form is 4.2 g/cm³. Such high densities mean that such pigments incorporated into paint formulations utilising many common solvents which have much lower densities (e.g. in the region of 1 g/cm³) can result in the separation of the pigment as sediment during storage. Furthermore, its use inevitably attracts a weight burden and, for example, in aerospace applications where weight is a premium consideration, the use of titania necessarily results in higher fuel consumption, and hence elevated running costs.

Accordingly, it is an object of the present invention to provide a method of manufacture of titania coated microspheres which are suitable for use as white pigments for paint or plastics that have all the desirable properties of conventional titania pigments, yet have far lower density.

Shin and Kimura, in J. Ceram. Soc. Jap., 107 [9], 775-779 (1999), disclose an aqueous sol-gel process for the preparation of titania coated hollow glass microspheres in which a solution of titanium (IV) chloride is added slowly to hydrochloric acid. The TiCl₄/HCl solution is then added to an aqueous dispersion of hollow glass microspheres. An NH₄HCO₃ solution as precipitant is then titrated into the dispersion to produce the coated product.

The use of titanium (IV) chloride as a reagent in the coating process is problematic because this material is lachrymatory, liberating HCl in contact with moisture. In addition, contact of TiCl₄ with excess water can form orthotitanic acid (Ti(OH)₄) in an explosive exothermic reaction. TiCl₄ must therefore be handled under anhydrous conditions, complicating the manufacturing process.

Liquid phase deposition (LPD) is an alternative method of coating the surface of microspheres and can be used to deposit metal oxide thin films from aqueous solutions. The LPD process is based on an equilibrium reaction between a metal-fluoro complex and a metal oxide.

Liquid phase deposition has many advantages over other techniques for coating metal oxide films onto substrates such as sol-gel processes and chemical vapour deposition. LPD takes place in aqueous solution therefore avoiding the expense and safety aspects associated with using organic solvents. The process can also take place at ambient temperatures therefore reducing energy costs. There are further benefits regarding the morphology and quality of the deposited film which can be significant depending on the substrate to be coated.

The behaviour of an LPD solution is determined by a number of parameters such as reagent identities, reagent concentrations, temperature, pH, substrate surface area and substrate surface properties. Therefore, the optimal composition of the deposition solution must be determined and carefully controlled for each different system.

Shifu et al (Solar Energy, 79, 2005, pp1-9) describes the photocatalytic degradation of organophosphorus pesticides, using floating photocatalyst TiO₂.SiO₂ beads prepared by a specified method, by sunlight.

WO 96/00404 discloses encapsulated retroreflective elements and a method for making the same which involves chemical vapor deposition.

JP 07 035268 B describes a liquid phase precipitation method and the removal of zinc from the precipitation process.

Kishimoto et al ( J. Mater. Chem., 1998, 8(9), pp 2019-2024) discloses a deposition process wherein a film of anatase TiO₂ is generated on a substrate such as glass, quartz or glass wool.

This is especially important when coating microparticulate substrates, such as inorganic, particularly glass microspheres, because unless the reaction conditions are correctly chosen, a proportion of the metal oxide will homogeneously precipitate in the solution rather than adhering to the surface of the substrate. This is not only wasteful but problematic as the particles of metal oxide formed are difficult to separate from the coated particles and interfere with filtration of the coated particles from the reaction mixture.

The present invention addresses one or more of the above problems by providing: an optimal LPD process for coating inorganic microspheres with titanium dioxide. Furthermore, by altering the process conditions it is possible to control the morphology and crystal structure of the coating on the microspheres. The process has been developed with the aim of using the lowest cost precursor chemicals possible in order to make the process economical on an industrial scale.

### Summary of the Invention

In a first aspect, the present invention provides a process for the manufacture of titania-coated microspheres comprising at least the steps of:
(i) providing a mixture comprising (a) a solution of a titania precursor of formula AₚTi_{q}Fᵣ in a solvent comprising water, wherein A is selected from the group consisting of hydrogen, alkali metal and ammonium, p is 0, 2, 3, 4 or 6, q is 1 or 2 and r is 4, 6, 7, 8 or 14 such that p + 4q = r and (b) inorganic microspheres;
(ii) adding a fluoride scavenger to the mixture; and
(iii) maintaining the pH of the mixture in the range of 1 to less than 2.

in this way, titania-coated inorganic microspheres are produced in the mixture.

The titania precursor should be soluble in the solvent comprising water. In one embodiment, the titania precursor is titanium (IV) fluoride. In a preferred embodiment, p is 2, 3, 4 or 6, q is 1 or 2 and r is 6, 7, 8 or 14, such that p + 4q = r. The titania precursor is preferably selected from the group consisting of TiF₆²⁻, TiF₇³⁻, Ti₂F₁₄⁶⁻ and TiF₈⁴⁻, in which A is selected from hydrogen, an alkali metal or ammonium. More preferably, the titania precursor is selected from the group consisting of hexafluorotitanic acid (H₂TiF₆) or ammonium hexafluorotitanate. Even more preferably, the titania precursor is H₂TiF₆.

A microsphere is a substantially spheroid particle. The microspheres used in the present invention preferably have a diameter in the range of from 1 to 1000 micrometers. The microsphere may be solid or porous, the latter containing one or more voids. A microsphere with a shell enclosing a void is referred to as a hollow microsphere.

The inorganic microspheres used herein are preferably composed of: one or more materials selected from the list consisting of glass, ceramic and metal oxide. Preferred glass microspheres are selected from the group consisting of: silica glass, soda-lime glass, borosilicate glass, aluminosilicate glass and mixtures of these glasses.

Hollow microspheres comprising a glass shell ("hollow glass microspheres") are also known as microbubbles or microballoons and are preferred inorganic microspheres for the present invention. Hollow aluminosilicate glass microspheres extracted from fly ash are known as cenospheres and can also be used.

In a further embodiment, the pH of the mixture is preferably maintained in the range of 1.6 to 1.9, more preferably the pH is maintained between 1.7 and 1.8.

By maintaining the pH of the mixture in a particular range, the rate of precipitation of the titania is controlled, avoiding the homogeneous precipitation of free titania in the solution, rather than on the microsphere substrate. Free titania produced by homogeneous precipitation is difficult to remove from the suspension of inorganic microspheres, increasing the number of steps and cost of the process.

In some systems, the rate of precipitation of titania can increase with pH, such that at a pH in excess of 2, the rate of the reaction can be excessive, resulting in the homogeneous precipitation of titania in the mixture, as well as on the inorganic microspheres. This effect is particularly apparent at the start of the coating reaction when the concentration of titania precursor is greatest.

Some titania precursors, such as ammonium hexafluorotitanate, form a solution with a pH in excess of 2. An acid may have to be added to the reaction mixture to lower the pH to the required range. Suitable acids include one or more acids selected from the group consisting of hydrochloric, nitric or sulphuric acids. The acid is preferably added prior to the addition of the fluoride ion scavenger which initiates the precipitation of titania. The titania precursor, hexafluorotitanic acid has the advantage that it is inherently acidic, forming a solution with an initial pH in the range of 1 to less than 2, therefore simplifying the process because the addition of a separate acid to lower the pH is not required.

The precipitation of titania produces hydrogen ions, leading to a reduction in the pH as the reaction progresses. The rate of the precipitation reaction decreases with decreasing pH, such that below a pH of 1 the reaction may proceed at an unacceptably slow rate. In a preferred embodiment, a base is delivered to the mixture in order to maintain the pH in the desired range in accordance with step (iii).

The delivery of the base can be achieved by titration, for instance in response to real-time pH measurement. Alternatively, a particular system may be analysed and characterised by determining the change in pH resulting from a given rate or rates of addition of the base. Once an appropriate rate of addition of base has been determined, this rate can be used in subsequent coating reactions for that particular system, without the need to monitor the pH in real-time, or at all during the course of the reaction.

It will be apparent that the base could be added at a uniform rate over the duration of the reaction, or at two or more rates. In a preferred embodiment, sufficient base or acid is added to the reaction mixture to provide a solution with a pH in the range of 1 to less than 2 prior to the initiation of the titania precipitation by the addition of the fluoride ion scavenger. After the addition of the fluoride ion scavenger, the base is added at a rate sufficient to maintain the pH of the solution in the range of 1 to less than 2.

The base is preferably any aqueous soluble material capable of neutralising hydrogen ions to produce water. Weak bases such as ammonia or strong bases such as alkali metal hydroxides may be used.

The base is even more preferably ammonia and most preferably concentrated ammonia. The use of a weak base such as ammonia provides greater control of the pH compared to the use of a strong base such as an alkali metal hydroxide, for a given molarity of base added to the mixture. In addition, ammonia allows the formation of ammonium hexafluorotitanate in situ in the solution when the titania precursor is hexafluorotitanic acid. This is beneficial in terms of cost because hexafluorotitanic acid is a less expensive feedstock than ammonium hexafluorotitanate.

For instance, when the titania precursor is hexafluorotitanic acid, the fluoride ion scavenger is A1 (III) (as discussed below) and the base is ammonia, it has been determined that the addition of approximately 3 molar equivalents of ammonia with respect to the hexafluorotitanic acid maintains the pH in a range of 1 to less than 2.

When the titania precursor is hexafluorotitanic acid, the fluoride ion scavenger is boric acid (as discussed below) and the base is ammonia, it has been determined that the addition of approximately 2 molar equivalents of ammonia with respect to the hexafluorotitanic acid maintains the pH in the range of 1 to less than 2.

It has been found that a slower rate of precipitation produces a smoother titania coating on the inorganic microspheres. As already discussed, the rate of precipitation of the titania can be controlled by the pH of the solution, such that at a lower pH, the rate of precipitation is also lower. Thus, reducing the rate of addition of the base will result in the pH of the solution remaining low, and a smoother titania coating being formed. A smoother coating has greater transparency. Analogously, if the rate of addition of the base is increased, a rougher, more dimpled coating will be produced. A rougher coating contains more, smaller crystallites and scatters more light.

The fluoride ion scavenger can be any agent that will react with fluoride to form a stable complex, for instance a complex which removes free fluoride ions from the solution. It is preferred that the molar ratio of fluoride ion scavenger to titania precursor is greater than or equal to approximately1:1.

In one embodiment, the fluoride ion scavenger can be boric acid. In this case, it is preferred that the temperature of the mixture is maintained in the range of 40 to 60°C. more preferably about 50°C. The ratio of boric acid to titania precursor, such as hexafluorotitanate, is preferably approximately 2:1.

In an alternative embodiment, the fluoride ion scavenger can be a water-soluble AI (III) salt. Preferably, the AI (III) salt is selected from the group consisting of aluminium (III) nitrate nonahydrate and aluminium (III) sulphate hydrate. More preferably, the fluoride ion scavenger is aluminium (III) sulphate hydrate. In the case that a water-soluble AI (III) salt is used, it is preferred that the temperature of the mixture is maintained in the range of 20 to 40 °C, more preferably 30 °C. The ratio of AI (III) to titania precursor, such as hexafluorotitanate, is preferably approximately 1.4:1.

It has been found that the process of the invention is suitable for the deposition of non-crystalline titania on a inorganic microsphere substrate. After titania deposition, the coated inorganic microspheres may be calcined at a temperature in the range of 300 to 1000 °C to produce crystalline titania, such as the anatase or rutile phases.

The titania coated microspheres can be isolated from the mixture by filtration.

### Detailed Description

In the process of the invention, titanium dioxide is deposited from an aqueous solution of titania precursor, which is a fluorotitanate. The titania precursor may be a hexafluorotitanate.

Reaction (I) shows the precipitation of titania from hexafluorotitanate. The hexafluorotitanate could derive from a titania precursor such as hexafluorotitanic acid or ammonium hexafluorotitanate. Hexafluorotitanic acid is a preferred hexafluorotitanate precursor due to its low cost and bulk availability compared to ammonium hexafluorotitanate.

TiF₆²⁻ + 2H₂O = TiO₂ + 4H⁺ + 6F⁻ (I)

Under appropriate conditions, reaction (I) can be biased in favour of the products, supersaturating the solution with titanium oxide. Deposition of titania onto microspheres suspended in the solution then occurs. Preferably, the mixture temperature during the process is in the range of 10 to 80 °C.

The hydrolysis of the fluorotitanate and the formation of titanium dioxide are promoted by a fluoride ion scavenger. The scavenger removes fluoride ions from the solution, shifting the equilibrium of reaction (I) to the right, thus favouring the production of titania.

For example, boric acid is one effective fluoride ion scavenger which acts according to reaction (II) to remove solvated hydrogen fluoride from the mixture:

H₃BO₃ ⁺ 4H⁺ + 4F⁻ → BF₄⁻ + H₃O⁺ + 2H₂O (II).

If boric acid is used as the fluoride ion scavenger in the process of the present invention, it is preferred that the reaction temperature is in the range of 40 to 60 °C, more preferably a temperature of about 50 °C, in order to achieve a reasonable rate of deposition on the microspheres.

The ratio of boric acid is preferably approximately 2.0 molar equivalents with respect to a hexafluorotitanate precursor.

Water soluble Aluminium (III) salts such as aluminium (III) nitrate nonahydrate or aluminium (III) sulphate hydrate can also be used as fluoride ion scavengers. Aluminium (III) sulphate hydrate is substantially cheaper per mole of aluminium than the corresponding nitrate, significantly lowering the overall cost of the process. When these aluminium (III)-based scavengers are used, the mixture temperature is preferably in the range of 20 to 40 °C, more preferably about 30°C.

The ratio of AI (III) is preferably approximately 1.4 molar equivalents with respect to a hexafluorotitanate precursor.

It is apparent that a combination of reactions (I) and (II) lead to a net increase in hydrogen ion concentration, and a corresponding reduction in pH, In particular, for every mole of hexafluorotitanate hydrolysed, a mole of hydrogen ions is produced. However, any increase in hydrogen ion concentration will shift the equilibrium of reaction (I) in favour of the hexafluorotitanate reactant, rather than the titania product.

The process and reaction conditions must therefore be precisely controlled to enable the successful coating of the microspheres. If the mixture is too acidic and the pH is too low, then reaction (I) will be biased towards the reactants and the deposition will occur too slowly. If the pH is too high then reaction (I) will proceed too quickly and homogeneous titania precipitation occurs. Homogeneous titania precipitation is highly unfavourable because titania will precipitate freely in the mixture. This should be avoided because it is difficult to separate free titania from the coated microspheres.

Careful adjustment and monitoring of reaction pH is essential in controlling deposition during LPD processes. This is particularly the case when coating inorganic microspheres as it is necessary to obtain controlled growth of titanium dioxide onto the microspheres whilst minimising free titanium dioxide produced. If the pH is too low then deposition occurs too slowly whereas if the pH is too high then homogenous precipitation occurs.

In order to provide optimal titania deposition onto the microspheres, the pH of the mixture is maintained in the range of 1 to less than 2, preferably 1.6 to 1.9, more preferably 1.7 to 1.8.

Control of the pH can be achieved by adding a base, such as concentrated ammonia, during the process. The addition of the base neutralises the hydrogen ions produced by reaction (II), ensuring the deposition of the titania on the microsphere substrate.

In the preferred process using hexafluorotitanic acid as the precursor, concentrated ammonia solution can be gradually added to control the pH. It has also been found that adding about 3 equivalents of ammonia with respect to hexafluorotitanic acid during the reaction achieves a pH in the desired range.

The concentration of titania precursor in the aqueous deposition solution is preferably in the range of 0.1 to 0.2 M. Higher concentrations than this may result in uncontrolled deposition of titanium dioxide leading to uneven growth on the substrate and a large amount of free titanium dioxide which is wasteful and problematic. Lower concentrations than this may result in no or poor deposition of titanium dioxide due to the condition of supersaturation not being met.

By selecting and controlling the reaction parameters, it is possible to obtain different crystal structures and morphologies of the titanium dioxide coating. The coating layer can be made smooth or rough. The coating layer can also be made clear and transparent to visible light or made opaque and highly scattering.

The process of the invention is further described in the following nonlimiting Examples.

### Example 1

A 1 M solution of ammonia was prepared by adding 14.08 ml of 28-30% v/v aqueous ammonia to deionised water (200 ml), with stirring.

A carrier solution was prepared by placing 720 ml in a 1 L beaker with a stirrer and pH probe. The stirrer was started. The pH was measured to be 5.01. Titanium (IV) fluoride (5.38 g) was added portionwise to the stirred deionised water. The pH of the solution fell to 1.63. Boric acid (8.06 g) was then added portionwise with stirring. The pH of the solution remained unchanged. The 1 M ammonia solution was used to titrate the titanium (IV) fluoride/ boric acid solution, by dropwise addition with stirring, to pH 1.70 (*ca*. 12 ml ammonia solution).

The coating reaction was carried out by first equipping a 1000 ml flanged round bottomed reaction vessel with an overhead-driven Teflon-coated stirrer consisting of a shaft with 2 equally spaced Teflon screw propeller rotors and a thermocouple. The vessel was immersed in a constant temperature bath set to 60 °C. The vessel was charged with 5.00 g hollow glass microspheres (iM30K; 3M Corporation) and then with the titanium (IV) fluoride/ boric acid/ ammonia solution. The stirrer was switched on and set to 300 rpm. The pH of the mixture was initially 1.89, and began to fall immediately. By dropwise manual addition of the ammonia solution, the pH was maintained at between pH 1.80 and 1.85 and the total amount of ammonia solution added over the course of the reaction (ca. 3 hours) was ca. 35 ml. The reaction mixture was stirred for a total of 21 hours at 60 °C at 300 rpm. After this time the pH remained constant at 1.84.

The microspheres were recovered by filtration through a pre-weighed sintered glass funnel (diameter 90 mm) lined with GF/C glass fibre filter paper, fitted into a Buchner flask. The microspheres were then washed with deionised water (3 x 50 ml), deionised water:methanol (1:1, 50 ml) and methanol (2 x 50 ml), and allowed to dry under negative pressure for 15 minutes. The microspheres were further dried under vacuum at 120 °C for 15 minutes. The product was then calcined at 750 °C for 1 hour in a muffle furnace.

The titania coated microspheres were passed down a 212/150/75 micron sieving tower, to yield a mobile white powder (5.17 g, 61 %) as a product. Microscopic visual examination of the titania coated microspheres showed that they were opaque with a slightly rough surface, but without any noticeable 'crazing'. Total particle density was determined at 0.89 g cm³, the titania loading was 360 mg TiO₂ per gram product, and the titania thickness was 260 nm.

### Example 2

Example 2 uses a simplified process compared to Example 1. Hexafluorotitanic acid has been substituted for titanium (IV) fluoride. In addition, rather than using dynamic pH adjustment by titration with ammonia solution, a fixed quantity of ammonia is added which was found to be suitable to maintain the solution in the desired pH range. This has the advantage of not requiring the continuing titration of the reaction mixture. Indeed, once the behaviour of a particular system has been fully characterised, it is not essential to monitor the pH during the reaction, as the amount of base, such as ammonia which is required to maintain the pH in the desired range is known, and this can be added at the start of the reaction.

22.57 ml of 60%wt H₂TiF₆ (Aldrich) solution was dissolved in 500 ml of deionised water in a 1000 ml round-bottomed flask placed in a water bath. Then 15.00 g of hollow glass microspheres (iM30K; 3M Corporation) were added and the mixture was mechanically stirred at 300 rpm. A solution of 17.02 g boric acid (Aldrich) in 500 ml deionised water was added. This provided a concentration of H₂TiF₆ of 0.14 M and a concentration of boric acid of 0.28 M.

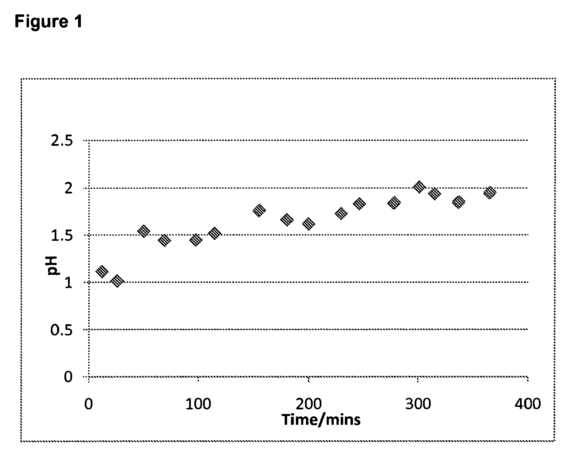

The temperature of the water bath was monitored by thermostat and maintained at 50°C. 16.72 ml of concentrated ammonia solution (Merck) was added continuously over 240 minutes at a rate of 70 µl/min. The reaction was then stirred for a further 17 hours. During the reaction, the pH of the solution was monitored by dipping the pH probe into the solution for each reading. After each pH measurement, the probe was removed from the solution and recalibrated. The probe was visually checked for titania deposition after each measurement, and cleaned if necessary. The variation of the pH as the reaction progressed is shown in Figure 1.

The microspheres were recovered by filtration through a sintered glass funnel (diameter 90 mm) lined with GF/C glass fibre filter paper, washed with water and methanol, and dried in a vacuum oven at 120°C for 4 hours.

### Reference Example 1

This reference Example describes a process in which there is no control of the pH of the solution containing the titanium precursor, fluoride ion scavenger and glass microspheres. The mixture has an initial pH of 4.5, and the pH of the solution remains above 4.5 for the duration of the reaction.

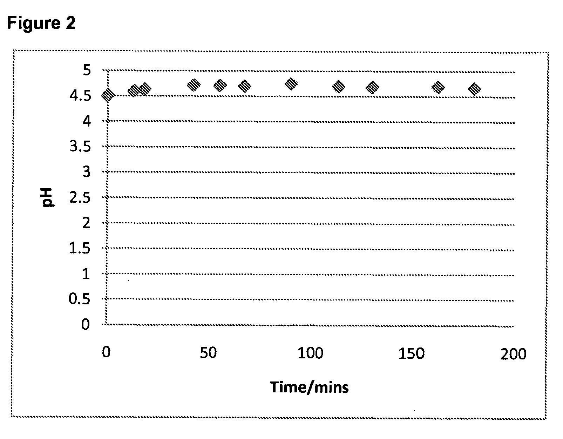

9.27 g boric acid (Aldrich) was dissolved in 500 ml water. 9.89 g of (NH₄)₂TiF₆ (Aldrich) was dissolved in 500 ml water. The two solutions were added to a 1000 ml round-bottomed flask placed in a water bath at 50°C and mechanically stirred at 300 rpm. The pH of the mixture was 3.82. 15.00 g of hollow glass microspheres were added and the pH rose to 4.50. The reaction mixture was stirred at 50 °C for 3 hours. During the reaction, the pH of the solution was monitored as described in Example 1. The variation of the pH as the reaction progressed is shown in Figure 2.

The microspheres were collected by filtration as described above, washed with water and methanol, and dried in a vacuum oven at 120°C for 3 hours.

As a result of the low concentrations of ammonium hexafluorotitanate (0.05 M) and boric acid (0.15 M) present in the reaction solution and the absence of any pH control, very little titania had been deposited on the microspheres. This was confirmed by microscopic examination and gravimetric analysis which revealed that the final mass of microspheres after drying was 15.47 g. Only a 12% deposition of titania onto the microspheres was achieved.

### Example 3

This Example is similar to Example 2 except the boric acid fluoride ion scavenger has been substituted with aluminium (III) sulphate hydrate.

22.57 ml of 60%wt H₂TiF₆ (Aldrich) solution was dissolved in 500 ml of deionised water in a 1000 ml round-bottomed flask. The flask was placed in a constant temperature water bath at a temperature of 30°C. 15.00 g of hollow glass microspheres (iM30K; 3M Corporation) were added to the flask and the mixture was mechanically stirred at 300 rpm. A filtered solution of 65.10 g Al₂(SO₄)₃.xH₂O (Aldrich) in 500 ml deionised water was added. This provided a concentration of H₂TiF₆ of 0.14 M and a concentration of Al₂(SO₄)₃of 0.10 M.

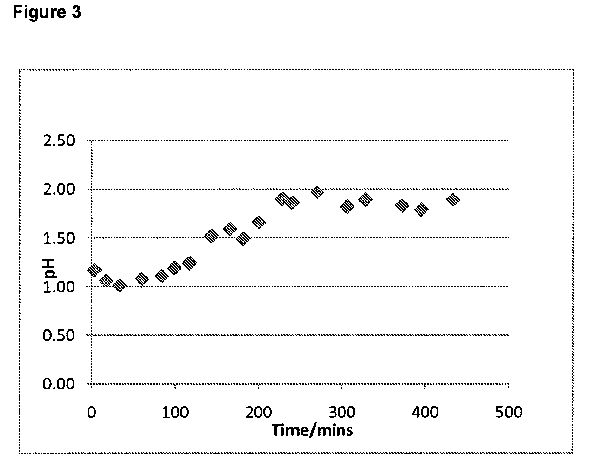

25.5 ml of concentrated ammonia solution (Merck) was added continuously over 240 minutes at a rate of 106 µl/min. The reaction was then stirred for a further 17 hours. During the reaction, the pH of the solution was monitored as described in Example 2. The variation of the pH as the reaction progressed is shown in Figure 3.

The microspheres were collected by filtration in a similar manner to Example 2, washed with water and methanol, and dried in a vacuum oven at 120°C for 4 hours.

A calcining step such as that described previously can be used to convert the non-crystalline titania coating into the corresponding anatase or rutile phase.

Numerous variations are possible within the materials and processes described herein. For example, further tuning of density may be achieved by coating the microsphere with two or more layers of different materials. The extra layer may comprise a different oxide from the titania mentioned already, or a coating of some other material chosen for particular properties.

Where the material includes a wide distribution of microsphere sizes, settling may occur over time. It is generally possible to specify an arbitrarily tight tolerance on the diameters of the starting microspheres, but this increases the cost of the starting material.

With regard to the size of the spheres chosen, there is a relatively free choice. In paint applications, smaller sized microspheres may be favoured in light of the resulting smoothness.

## Claims

1. A process for the manufacture of titania-coated microspheres comprising at least the steps of:
(i) providing a mixture comprising (a) a solution of a titania precursor of formula AₚTi_{q}Fᵣ in a solvent comprising water, wherein A is selected from the group consisting of hydrogen, alkali metal and ammonium, p is 0, 2, 3, 4 or 6, q is 1 or 2 and r is 4, 6, 7, 8 or 14 such that p + 4q = r and (b) inorganic microspheres;
(ii) adding a fluoride scavenger to the mixture; and
(iii) maintaining the pH of the mixture in the range of 1 to less than 2.

2. The process of claim 1 wherein titania precursor is selected from the group consisting of hexafluorotitanic acid or ammonium hexafluorotitanate.

3. The process of claim 1 or claim 2 wherein the titania precursor is hexafluorotitanic acid.

4. The process of any one of the preceding claims wherein the pH of the mixture is maintained in the range of 1.6 to 1.9.

5. The process of any one of the preceding claims wherein a base is delivered to the mixture in order to maintain the pH in step (iii).

6. The process of claim 5 wherein the base is concentrated ammonia.

7. The process of any one of the preceding claims wherein the molar ratio of fluoride ion scavenger to titania precursor is greater than or equal to 1:1.

8. The process of any of the preceding claims wherein the fluoride scavenger is boric acid.

9. The process of claim 8 comprising the further step of (iv) maintaining the temperature of the mixture in the range of 40 to 60 °C.

10. The process of claim 8 or claim 9 wherein the molar ratio of boric acid to titania precursor is 2:1.

11. The process of any one of claims 1 to 7 wherein the fluoride ion scavenger is a water-soluble AI (III) salt.

12. The process of claim 11 wherein the AI(III) salt is selected from the group consisting of aluminium (III) nitrate nonahydrate and aluminium (III) sulphate hydrate.

13. The process of claim 11 or claim 12 comprising the further step of (iv) maintaining the temperature of the mixture in the range of 20 to 40 °C.

14. The process of any one of claims 11 to 13 wherein the molar ratio of AI(III) to titania precursor is about 1.4:1.

15. The process of any one or more of the preceding claims wherein the inorganic microspheres are glass microspheres.

## Patentansprüche

1. Verfahren zur Herstellung Titandioxid-beschichteter Mikrokügelchen, das wenigstens die folgenden Schritte umfasst:
i) Bereitstellen einer Mischung, die umfasst a) einen Titandioxid-Vorläufer mit der Formel AₚTi_{q}Fᵣ in einem Wasser umfassenden Lösemittel, wobei A aus der aus Wasserstoff, Alkalimetall und Ammonium bestehenden Gruppe ausgewählt ist, p gleich 0, 2, 3, 4 oder 6 ist, q gleich 1 oder 2 ist und r gleich 4, 6, 7, 8 oder 14 ist, sodass p + 4q = r, und b) anorganische Mikrokügelchen,
ii) Zugeben eines Fluoridfängers zur Mischung und
iii) Halten des pH-Wertes der Mischung im Bereich von 1 bis weniger als 2.

2. Verfahren nach Anspruch 1, wobei der Titandioxid-Vorläufer aus der aus Hexafluortitansäure oder Ammoniumhexafluortitanat bestehenden Gruppe ausgewählt ist.

3. Verfahren nach Anspruch 1 oder Anspruch 2, wobei der Titandioxid-Vorläufer Hexafluortitansäure ist.

4. Verfahren nach irgendeinem der vorhergehenden Ansprüche, wobei der pH-Wert der Mischung im Bereich von 1,6 bis 1,9 gehalten wird.

5. Verfahren nach irgendeinem der vorhergehenden Ansprüche, wobei zum Halten des pH-Wertes im Schritt iii) der Mischung eine Base zugeführt wird.

6. Verfahren nach Anspruch 5, wobei die Base konzentriertes Ammoniak ist.

7. Verfahren nach irgendeinem der vorhergehenden Ansprüche, wobei das Molverhältnis von Fluoridionenfänger zu Titandioxidvorläufer größer als oder gleich 1:1 ist.

8. Verfahren nach irgendeinem der vorhergehenden Ansprüche, wobei der Fluoridfänger Borsäure ist.

9. Verfahren nach Anspruch 8, das den weiteren Schritt des iv) Haltens der Temperatur der Mischung im Bereich von 40 bis 60 °C umfasst.

10. Verfahren nach Anspruch 8 oder Anspruch 9, wobei das Molverhältnis von Borsäure zu Titandioxidvorläufer bei 2:1 liegt.

11. Verfahren nach irgendeinem der Ansprüche 1 bis 7, wobei der Fluoridionenfänger ein wasserlösliches AI(III)-Salz ist.

12. Verfahren nach Anspruch 11, wobei das AI(III)-Salz aus der aus Aluminium(III)nitratnonahydrat und Aluminium(III)sulfathydrat bestehenden Gruppe ausgewählt ist.

13. Verfahren nach Anspruch 11 oder Anspruch 12, das den weiteren Schritt des iv) Haltens der Temperatur der Mischung im Bereich von 20 bis 40 °C umfasst.

14. Verfahren nach irgendeinem der Ansprüche 11 bis 13, wobei das Molverhältnis von AI(III) zu Titandioxidvorläufer bei ungefähr 1,4:1 liegt.

15. Verfahren nach irgendeinem oder mehreren der vorhergehenden Ansprüche, wobei die anorganischen Mikrokügelchen Glas-Mikrokügelchen sind.

## Revendications

1. Procédé de fabrication de microsphères revêtues de dioxyde de titane comprenant au moins les étapes de :
(i) fourniture d'un mélange comprenant (a) une solution d'un précurseur de dioxyde de titane de formule AₚTi_{q}Fᵣ dans un solvant comprenant de l'eau, dans laquelle A est choisi dans le groupe constitué par l'hydrogène, un métal alcalin et l'ammonium, p vaut 0, 2, 3, 4 ou 6, q vaut 1 ou 2 et r vaut 4, 6, 7, 8 ou 14 de sorte que p + 4q = r et (b) des microsphères inorganiques ;
(ii) addition d'un éliminateur de fluorure au mélange ; et
(iii) maintien du pH du mélange dans la plage de 1 à moins de 2.

2. Procédé selon la revendication 1, dans lequel le précurseur de dioxyde de titane est choisi dans le groupe constitué par l'acide hexafluorotitanique et l'hexafluorotitanate d'ammonium.

3. Procédé selon la revendication 1 ou la revendication 2, dans lequel le précurseur de dioxyde de titane est l'acide hexafluorotitanique.

4. Procédé selon l'une quelconque des revendications précédentes, dans lequel le pH du mélange est maintenu dans la plage de 1,6 à 1,9.

5. Procédé selon l'une quelconque des revendications précédentes, dans lequel une base est apportée au mélange de façon à maintenir le pH dans l'étape (iii).

6. Procédé selon la revendication 5, dans lequel la base est de l'ammoniaque concentrée.

7. Procédé selon l'une quelconque des revendications précédentes, dans lequel le rapport molaire de l'éliminateur d'ions fluorure au précurseur de dioxyde de titane est supérieur ou égal à 1:1.

8. Procédé selon l'une quelconque des revendications précédentes, dans lequel le désactiveur d'ions fluorure est l'acide borique.

9. Procédé selon la revendication 8, comprenant l'étape supplémentaire de (iv) maintien de la température du mélange dans la plage de 40 à 60°C.

10. Procédé selon la revendication 8 ou la revendication 9, dans lequel le rapport molaire de l'acide borique au précurseur de dioxyde de titane est de 2:1.

11. Procédé selon l'une quelconque des revendications 1 à 7, dans lequel l'éliminateur d'ions fluorure est un sel d'Al(III) soluble dans l'eau.

12. Procédé selon la revendication 11, dans lequel le sel d'Al (III) est choisi dans le groupe constitué par le nitrate d'aluminium(III) nonahydraté et un sulfate d'aluminium(III) hydraté.

13. Procédé selon la revendication 11 ou la revendication 12, comprenant l'étape supplémentaire de (iv) maintien de la température du mélange dans la plage de 20 à 40°C.

14. Procédé selon l'une quelconque des revendications 11 à 13, dans lequel le rapport molaire de l'Al(III) au précurseur de dioxyde de titane est d'environ 1,4:1.

15. Procédé selon l'une ou plusieurs quelconques des revendications précédentes, dans lequel les microsphères inorganiques sont des microsphères de verre.
